# EUROPEAN PATENT SPECIFICATION

(11) **EP 2 797 711 B1**
(45) Date of publication and mention of the grant of the patent: **17.05.2017**
(21) Application number: 12821030.9
(22) Date of filing: 19.12.2012
(51) Int. Cl.: B23K 26/22, B23K 26/32

(54) **WELDED STRUCTURE WITH AT LEAST THREE LASER WELDED NUGGETS ARRANGED ALONG A VIRTUAL CLOSED CURVE, AND CORRESPONDING LASER WELDING METHOD**
GESCHWEISSTE STRUKTUR MIT MINDESTENS DREI LASERGESCHWEISSTEN, ENTLANG EINER VIRTUELLEN GESCHLOSSENEN KURVE ANGEORDNETEN SCHWEISSKERNEN UND ENTSPRECHENDES LASERSCHWEISSVERFAHREN
STRUCTURE SOUDÉE AVEC AU MOINS TROIS NOYAUX DE SOUDURE SOUDÉS AU LASER DISPOSÉS LE LONG D'UNE COURBE VIRTUELLE FERMÉE ET PROCÉDÉ DE SOUDAGE AU LASER CORRESPONDANT

(30) Priority: 27.12.2011 JP 2011286694
(43) Date of publication of application: 05.11.2014
(73) Proprietor: TOYOTA JIDOSHA KABUSHIKI KAISHA, Toyota-shi, Aichi-ken, 471-8571 (JP)
(72) Inventor: HISADA, Kohei, Aichi-ken 471-8571 (JP); OGURA, Shuhei, Aichi-ken 471-8571 (JP); KAWAKITA, Atsushi, Aichi-ken 471-8571 (JP); IKEDA, Tamotsu, Aichi-ken 471-0853 (JP); KOSUGI, Hidenori, Aichi-ken 471-8571 (JP)
(74) Representative: Winter, Brandl, Fürniss, Hübner, Röss, Kaiser, Polte - Partnerschaft mbB
(86) International application number: PCT/IB2012/002749
(87) International publication number: WO 2013/098621

(56) References cited:
- JP-A- H06 155 058
- JP-A- 2001 062 575
- JP-A- 2001 162 388
- JP-A- 2006 315 062
- US-A1- 2002 195 432

## Description

### BACKGROUND OF THE INVENTION

### 1. Field of the Invention

This invention relates to techniques of a welded structure having a plurality of steel plates joined by laser welding, and a method of the laser welding (laser welding method).

### 2. Description of Related Art

A welding method using laser (laser welding method) is widely used as one of welding methods for joining superposed steel plates, due to its advantages. For example, the laser welding less likely causes distortion, enables high-speed welding, and causes less heat-affected zone left. The laser welding method typically forms a welded portion by directing a laser beam along a straight line.

Problems have been pointed out for this method. For example, when a welded portion is formed linearly by this method, stress concentration tends to occur to cause deficiency at the opposite ends of the welded portion, resulting in difficulty in ensuring stable quality for the welded portion. In order to improve the problems, laser welding methods have been proposed to form welded portions with a variety of shapes.

One of such methods is a laser welding method forming a welded portion into a C-like shape (hereafter, referred to as the "C-shaped welded portion"). When this laser welding method is used, stress concentration can be alleviated by forming the C-shaped welded portion such that a curved portion of the welded portion is located at opposite ends of welded range where the stress tends to concentrate, while the opposite ends of the welded portion are located at an intermediate portion between the ends which are less affected by external force (in other words, less contributes to enhancement of welding strength). However, the strength of the C-shaped welded portion thus formed is no more than that of a welded portion formed by a conventional laser welding method into a circumferential or circular shape with a similar diameter to that of the C-shaped welded portion.

For another example, there is a laser welding method forming a welded portion into a loop shape (hereafter, referred to as the "loop-shaped welded portion "), or into a spiral shape (hereafter, referred to as the "spiral-shaped welded portion ") (see Japanese Patent Application Publication No. 2000-145450 (JP-2000-145450 A) and Japanese Patent Application Publication No. 2004-98122 (JP-2004-98122 A), for example). This type of laser welding method also alleviates the concentration of stress in the formed loop-shaped or spiral shaped welded portion in the same manner as in the C-shaped welded portion. However, the strength of the loop-shaped or the spiral-shaped welded portion, like the aforementioned C-shaped welded portion, is not more than that of a welded portion formed by a conventional laser welding method into a circumferential or circular shape with a similar diameter to that of the loop-shaped or spiral-shaped welded portion.

For another example, there is a laser welding method forming a welded portion into a shape consisting of two C's placed opposite to each other (hereafter, referred to as the "double-C-shaped welded portion") (see Japanese Patent Application Publication No. 2009-233712 (JP-2009-233712 A), for example). This type of laser welding method also alleviates the concentration of stress in the welded portion that is formed into a double-C shape in the same manner as in the aforementioned C-shaped welded portion. Further, in this laser welding method, a welded portion is formed into a shape consisting of two C's placed opposite to each other, whereby the welding of an intermediate portion which is less affected by external force (in other words, less contributes to enhancement of welding strength) is omitted, resulting in increased productivity. However, the strength of such a double-C-shaped welded portion, like the aforementioned C-shaped welded portion, is no more than that of a welded portion formed by a conventional laser welding method into a circumferential or circular shape with a similar diameter to that of the double-C-shaped welded portion.

For still another example, there is a laser welding method forming a welded portion formed by a plurality of nuggets arranged at a constant pitch along a virtual closed curve a circle (hereafter, referred to as the "nugget welded portion") (see Japanese Patent Application Publication No. 2001-62575 (JP-2001-62575 A)). In a welded portion formed by such a laser welding method, the nuggets are affected by external force without concentration of stress to some of the nuggets. Therefore, the nugget welded portion provides a stable quality. In the laser welding method described in JP-2001-62575 A, although a ratio of diameter to pitch of the nuggets is defined, specific values of the diameter and the pitch are not defined. In comparison with a welded portion formed by a conventional laser welding method into a circumferential or circular shape with a similar diameter to that of the closed curve of the nugget welded portion, the nugget welded portion sometimes but not always provides an equal or higher strength. A welded structure according to the preamble of claim 1 and a laser welding method for joining a plurality of steel plates superposed on each other according to the preamble of claim 4 are known from JP-2001-62575 A.

### SUMMARY OF THE INVENTION

This invention provides a welded structure having a plurality of steel plates joined by laser welding, and a welding method for the laser welding (laser welding method). A welded portion formed of a plurality of nuggets arranged at a constant pitch on a virtual closed curve is formed such that the welded portion constantly has strength equal to or higher than a welded portion formed by a conventional laser welding method having a circumferential or circular shape with a similar diameter equal to that of the closed curve.

First aspect of the present invention relates to a welded structure as defined in claim 1. The welded structure including a plurality of steel plates each joined to at least another one of the steel plates by laser welding. The plurality of steel plates include a welded portion. The welded portion is formed at a joint where the steel plate is joined to the other steel plate. The welded portion is formed of a plurality of nuggets. The plurality of nuggets are arranged along a virtual closed curve. When the thickness of the thinnest steel plates of the plurality of steel plates is denoted by t, the diameter of the nuggets is denoted by d, and the pitch between adjacent nuggets is denoted by p, d is 3√t or less, and p is 2d or more but no more than 5d, and the number of nuggets is three or more.

In the welded structure described above, a region containing all the nuggets forming the welded portion may be melt processed, and the region may be surrounded by a virtual inner curve formed along the closed curve on an inner side of the closed curve and by a virtual outer curve formed along the closed curve on an outer side of the closed curve.

In the welded structure described above, the plurality of steel plates may be superposed on each other.

Second aspect of the present invention relates to a laser welding method for joining a plurality of steel plates superposed on each other as defined in claim 4. The laser welding method includes forming a welded portion at a joint where each of the steel plates is joined to at least another one steel plate. The welded portion is formed of a plurality of nuggets. The plurality of nuggets are arranged along a virtual closed curve. When the thickness of the thinnest steel plates of the plurality of steel plates is denoted by t, the diameter of the nuggets is denoted by d, and the pitch between adjacent nuggets is denoted by p, d is 3√t or less, and p is 2d or more but no more than 5d. The number of nuggets is three or more.

The laser welding method described above may further include melt processing a region surrounded by a virtual inner curve formed along the closed curve on an inner side of the closed curve and by a virtual outer curve formed along the closed curve on an outer side of the closed curve, and the region containing all the nuggets forming the welded portion.

The invention offers advantages as described below. The welded structure and the laser welding method according to aspects of the invention are capable of forming a welded portion formed of a plurality of nuggets arranged at a constant pitch on a virtual closed curve, the welded portion always having a strength equal to or higher than a welded portion formed by a conventional laser welding method to have a circumferential or circular shape with a similar diameter to that of the closed curve.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a plan view showing a group of circular nuggets formed by a laser welding method according to an embodiment of the invention;
FIG. 1B is a cross-sectional view showing the group of circular nuggets formed by the laser welding method according to the embodiment of the invention, as viewed in the direction of the arrows A1-A1 in FIG. 1A;
FIG 2A is a perspective view illustrating a method of forming nuggets, and showing a state in which the nuggets are formed by a fixed-point formation method;
FIG 2B is a perspective view illustrating a method of forming nuggets, and showing a state in which the nuggets are formed by a scanning formation method;
FIG 2C is a perspective view illustrating a method of forming nuggets, and showing a state in which the nuggets are formed by a filling formation method;
FIG 2D is a perspective view illustrating a method of forming nuggets, and showing a state in which the nuggets are formed by a spiral formation method;
FIG. 3 is a graph illustrating, with dots and continuous lines, a relationship between radius and hardness of nuggets formed by a laser welding method according to a first embodiment of the invention;
FIG. 4 is a graph illustrating, with dots and a continuous line, a relationship between welding pitch of a group of circular nuggets formed by the laser welding method according to the first embodiment and percentage of defective ED in a region where the group of nuggets is formed;
FIG. 5 is a graph illustrating, with dots and a continuous line, a relationship between welding pitch of a group of circular nuggets formed by the laser welding method according to the first embodiment and ratio of peel strength relative to that of a circular nugget formed by a conventional laser welding method to have a similar diameter to that of the group of nuggets;
FIG. 6 is a graph illustrating, with dots and continuous lines, a relationship between diameter and strength of a group of circular nuggets formed by the laser welding method according to the first embodiment;
FIG. 7A is graph illustrating, with dots and continuous lines, a relationship between elapsed time and impact load or acceleration of the impact load applied to a group of circular nuggets formed by the laser welding method according to the first embodiment, the impact load being applied in a shear direction (more specifically, in a direction perpendicular to the thickness direction of the steel plates; the same shall apply hereafter);
FIG. 7B is a graph illustrating, with dots and continuous lines, a relationship between elapsed time and impact load or acceleration of the impact load applied to a group of circular nuggets formed by the laser welding method according to the first embodiment, the impact load being applied in a peeling direction (more specifically, in a thickness direction of the steel plates; the same shall apply hereafter);
FIG. 8A is a graph illustrating, with dots and continuous lines, a relationship between elapsed time and impact load or acceleration of the impact load applied to a single circular nugget formed by a laser welding method to have a similar diameter to that of the group of nuggets in FIG. 7, the impact load being applied in a shear direction;
FIG. 8B is a graph illustrating, with dots and continuous lines, a relationship between elapsed time and impact load or acceleration of the impact load applied to a single circular nugget formed by a laser welding method to have a similar diameter to that of the group of nuggets in FIG. 7, the impact load being applied in a peeling direction;
FIG. 9A is a graph illustrating, with dots and continuous lines, a relationship between elapsed time and impact load or acceleration of the impact load applied to a single circular nugget formed by a conventional spot welding method to have similar diameter to that of the group of nuggets in FIG. 7, the impact load being applied in a shear direction;
FIG. 9B is a graph illustrating, with dots and continuous lines, a relationship between elapsed time and impact load or acceleration of the impact load applied to a single circular nugget formed by a conventional spot welding method to have a similar diameter to that of the group of nuggets in FIG. 7, the impact load being applied in a peeling direction;
FIG. 10A is a graph illustrating, with dots and continuous lines, a relationship between the number of nuggets and strength against load of a group of circular nuggets formed by a laser welding method according to a second embodiment, for each arrangement direction of the group of nuggets (i.e., for each direction that the group of nuggets is arranged), the load being applied in a shear direction;
FIG. 10B is a graph illustrating, with dots and continuous lines, a relationship between the number of nuggets and strength against load of a group of circular nuggets formed by the laser welding method according to the second embodiment, for each arrangement direction of the group of nuggets, the load being applied in a peeling direction;
FIG. 11A is a graph illustrating, with dots and continuous lines, a relationship between diameter and strength against load of a group of circular nuggets formed by the laser welding method according to the second embodiment, for each arrangement direction of the group of nuggets, the load being applied in a shear direction;
FIG. 11B is a graph illustrating, with dots and continuous lines, a relationship between diameter and strength against load of a group of circular nuggets formed by the laser welding method according to the second embodiment, for each arrangement direction of the group of nuggets, the load being applied in a peeling direction;
FIG. 12A is a graph illustrating, with dots and continuous lines, a relationship between load to a group of circular nuggets formed by the laser welding method according to the second embodiment and distance of movement of a plurality of metal plates welded with the group of nuggets, when the load is applied in a shear direction;
FIG. 12B is a graph illustrating, with dots and continuous lines, a relationship between load to a group of circular nuggets formed by the laser welding method according to the second embodiment and distance of movement of a plurality of metal plates welded with the group of nuggets, when the load is applied in a peeling direction;
FIG. 13A is a plan view showing a group of nuggets formed by a laser welding method according to a third embodiment of the invention;
FIG. 13B is a plan view showing a group of nuggets formed by the laser welding method according to the third embodiment, the nuggets having a different shape from the nuggets in FIG. 13A;
FIG. 14A is one of diagrams showing procedures of a laser welding method according to a fourth embodiment of the invention and is a plan view showing a state of a group of nuggets immediately before spot-facing processing is performed;
FIG. 14B is one of the diagrams showing procedures of the laser welding method according to the fourth embodiment and is a cross-sectional view of the group of nuggets as viewed from the direction of the arrows A2-A2 in FIG. 14A;
FIG. 15A is one of the diagrams showing procedures of the laser welding method according to the fourth embodiment and is a plan view showing the group of nuggets in the course of the spot-facing processing;
FIG. 15B is one of the diagrams showing procedures of the laser welding method according to the fourth embodiment and is a cross-sectional view of the group of nuggets as viewed from the direction of the arrows A3-A3 in FIG. 15A;
FIG. 16A is one of the diagrams showing procedures of the laser welding method according to the fourth embodiment and is a plan view showing the group of nuggets after the spot-facing processing;
FIG. 16B is one of the diagrams showing procedures of the laser welding method according to the fourth embodiment and is a cross-sectional view of the group of nuggets as viewed from the direction of the arrows A4-A4 in FIG. 16A;
FIG. 17A is a graph illustrating, with dots and continuous lines, a relationship between diameter and strength against load of a group of circular nuggets formed by the laser welding method according to the fourth embodiment, for the cases when spot-facing processing is performed and when spot-facing processing is not performed, the load being applied in a shear direction;
FIG. 17B is a graph illustrating, with dots and continuous lines, a relationship between diameter and strength against load of a group of circular nuggets formed by the laser welding method according to the fourth embodiment, for the cases when spot-facing processing is performed and when spot-facing processing is not performed, the load being applied in a peeling direction;
FIG. 18A is a diagram showing a group of nuggets formed by the laser welding methods according to first to fourth embodiments of the invention and is a plan view showing a group of nuggets according to a first modification;
FIG. 18B is diagram showing a group of nuggets formed by the laser welding methods according to first to fourth embodiments of the invention and is a plan view showing a group of nuggets according to a second modification;
FIG. 19 is a plan view showing a group of circular nuggets formed by a laser welding method according to a fifth embodiment;
FIG 20A is a perspective view showing a specific example of a welded structure in which a group of circular nuggets formed by the laser welding method according to the fifth embodiment is used in a flange of the structure; and
FIG 20B is a plan view showing specific examples of arrangements of groups of circular nuggets formed by the laser welding method according to the fifth embodiment.

### DETAILED DESCRIPTION OF EMBODIMENTS

Exemplary embodiments of the invention will be described.

### Laser Welding Method According To First Embodiment

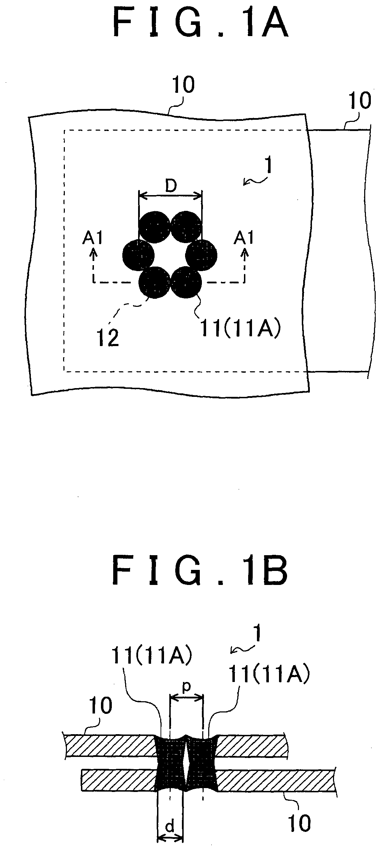

A laser welding method according to a first embodiment of the invention will be described with reference to FIG. 1A to FIG. 9B. The laser welding method according to the first embodiment is a laser welding method for joining a plurality of steel plates superposed on each other. This welding method has been developed for the purpose of giving higher strength characteristics to a welded portion (joint) of the steel plates in comparison with the strength of a welded portion formed by a conventional laser welding method or spot welding method. In the laser welding methods described above, a plurality of steel plates are joined by applying a laser beam in a direction intersecting with a surface of the superposed steel plates.

The "strength characteristics" of a welded portion (joint) formed by the laser welding method according to the first embodiment are principally evaluated for static strength and dynamic (impact) strength (the same applies to second to fifth embodiments described later). The term "static strength" means "static peel strength" represented by a maximum tensile load that welded steel plates can resist without peeling when the tensile load is applied to the welded steel plates such that the load is gradually increased in a peeling direction (more specifically, in a thickness direction of the steel plates; the same shall apply hereafter). The term "dynamic (impact) strength" means "impact shear strength" or "impact peel strength" represented by a maximum strength of welded portions of steel plates corresponding to a maximum tensile load that the steel plates can resist and an amount of energy that can be absorbed (amount of absorbed energy) when a tensile load is momentarily applied to the welded steel plates in a shear direction (more specifically, in a direction perpendicular to the thickness direction of the steel plates; the same shall apply hereafter), or in a peeling direction.

As shown in FIG. 1A, in a laser welding method according to the first embodiment, a welded portion 1 formed for joining a plurality of (for example, two in this embodiment) superposed steel plates 10 is formed of plurality of nuggets 11 having a circular shape as viewed in plan and arranged principally on a virtual closed curve 12, (hereafter, "the plurality of nuggets 11" shall be referred to collectively as "the group of nuggets 11A" whenever necessary). The closed curve 12 is located on the steel plate.

The shape of the closed curve 12 is not limited to a circular shape as in this embodiment, but it may be elliptical or any other curved shape or may be polygonal. The laser welding method according to the embodiment is applicable to any type of steel plates 10 regardless of whether they are surface-treated or not. The number of steel plates 10 to be joined by the laser welding method according to the embodiment is not limited two as in the embodiment, but may be three or more.

While the nuggets 11 can be formed by various methods as described below, any method can be employed in the laser welding method according to the embodiment.

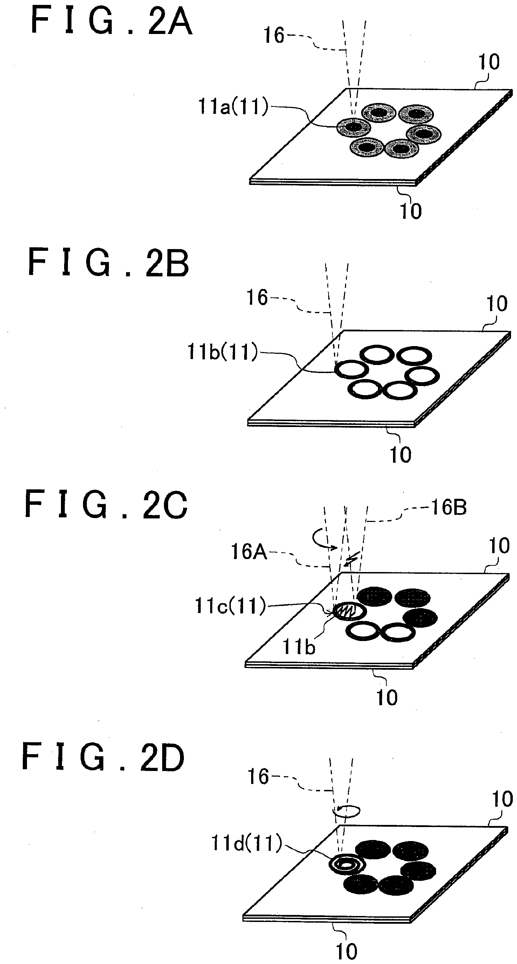

Specifically, as shown in FIG 2A, the nuggets 11 may be formed, for example, by a "fixed-point formation method" in which each circular nugget 11a is formed by directing a laser beam 16 to a predetermined point in a planar portion of the steel plate 10 for a certain period of time.

As shown in FIG 2B, the nuggets 11 may be formed by a "scanning formation method" in which each annular nugget 11b is formed by directing a laser beam 16 along a circular locus (a locus having the same shape as the circumference of the nuggets 11 shown in FIG. 1A) in a planar portion of the steel plate 10.

As shown in FIG 2C, the nuggets 11 may be formed by a "filling formation method" in which each circular nugget 11c is formed by forming an annular nugget 11b by directing a laser beam 16A along a circular locus in a planar portion of the steel plate 10 and then directing a laser beam 16B to fill the inside of the annular nugget 11b.

As shown in FIG 2D, the nuggets 11 may be formed by a "spiral formation method" in which each circular nugget 11d is formed by directing a laser beam 16 along a spiral locus in a planar portion of the steel plate 10.

The inventors of the invention have conducted various verification experiments and extensive studies on the welded portions 1 formed of a plurality of nuggets 11 formed by the formations methods described above, and have found specific ranges of values for the diameter of the nuggets 11 (dimension d in FIG. 1B) and the pitch between the nugget 11 (dimension p in FIG. 1B), and thus the inventors have reached completion of this first embodiment for embodying the laser welding method according to the invention.

Specifically, the inventors conducted first verification experiments, by focusing attention to the fact that fragile portions are more apt to be generated within a nugget 11 as the diameter d of the nugget 11 is increased, and measured the hardness of the inside of the nuggets 11 having various diameters d.

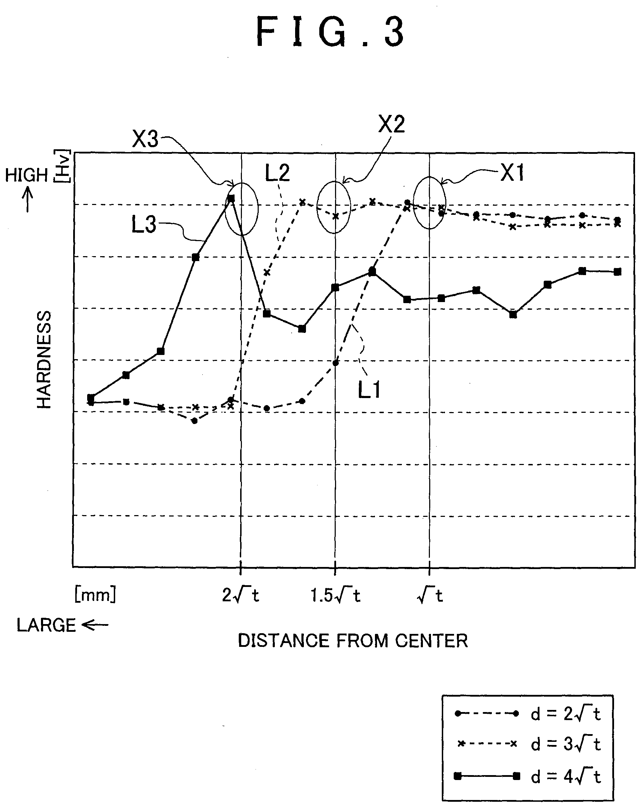

Results of the first verification experiments will be described with reference to FIG. 3. In FIG. 3, the vertical axis represents hardness of the nuggets 11 (in Hv), while the horizontal axis represents distance from the center of the nuggets 11 (in mm). The hardness was measured and plotted for each nugget 11 sequentially from the center of the nugget 11 toward the outside in a radial direction. FIG. 3 shows measurement results for three types of nuggets 11 having different diameters d (d = 2√t, 3√t, and 4√t), where "t" denotes a thickness of the thinnest steel plate 10 of the superposed steel plates 10.

As shown in FIG. 3, the hardness of the nugget 11 having a diameter d = 2√t (the line L1 in FIG. 3) gradually increases from the outside toward the center of the nugget 11 (that is, toward the right side in FIG. 3; the same apply hereafter), and assumes its maximum value near the outer periphery of the nugget 11 (that is, in a region X1 in FIG. 3). The hardness of the nugget 11, which has reached its maximum value near the outer periphery thereof, is kept substantially unchanged in all the regions within the nugget 11.

Likewise, the hardness of the nugget 11 having a diameter d = 3√t (the line L2 in FIG. 3) gradually increases from the outside toward the center of the nugget 11, and assumes its maximum value near the outer periphery of the nugget 11 (that is, in a region X2 in FIG. 3). The hardness of the nugget 11, which has become its maximum value near the outer periphery thereof, is kept substantially unchanged in all the regions within the nugget 11.

The hardness of the nugget 11 having a diameter d = 4√t also (the line L3 in FIG. 3) gradually increases from the outside toward the center of the nugget 11, and assumes its maximum value near the outer periphery of the nugget 11 (that is, in a region X3 in FIG. 3) but then the hardness drops sharply once reaching the inside of the nugget 11. The hardness which has dropped low near the outer periphery within the nugget 11 is then kept substantially unchanged at that low value in all the regions within the nugget 11.

Based on the results of the first verification experiments described above, the inventors have found that the diameter d of the nugget 11 should be set in a range equal to or less than 3√t (d ≤ 3√t).

Next, the inventors conducted second verification experiments, focusing attention on that when a plurality of steel plates 10 joined at a welded portion 1 is subjected to electrodeposition coating (ED), air pockets are apt to be created within the group of nuggets 11A if the pitch p between the nuggets 11 forming the welded portion 1 is too small, possibly resulting in increased percentage of defective ED of the steel plates 10. Thus, in the second verification experiments, percent defectives of ED were measured for the steel plates 10 joined at various welded portions 1 having different pitch dimensions p.

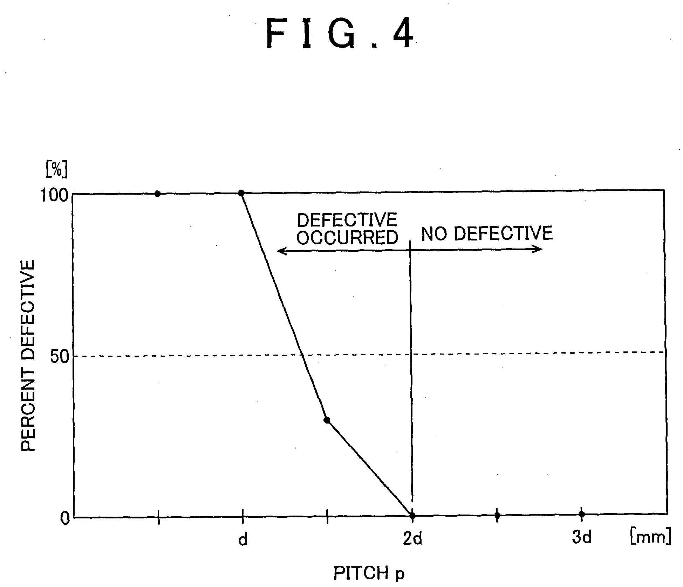

Results of the second verification experiments will be described with reference to FIG. 4. FIG. 4 is a graph showing a relationship between percentage of defective ED of the steel, plates 10, plotted on the vertical axis (in %), and pitch p between the nuggets 11, plotted on the horizontal axis (in mm). The letter "d" in FIG. 4 denotes a diameter d of the nugget 11.

As shown in FIG. 4, once the pitch p between the nuggets 11 exceeds d (mm), the percentage of defective ED of the steel plates 10 gradually decreases from 100% as the pitch p increases. When the pitch p between the nuggets 11 reaches 2d (mm), the percentage of defective ED of the steel plates 10 becomes 0%, and after that the percent defective remains at 0% regardless of how much the value of the pitch p increases.

Based on the results of the second verification experiments described above, the inventors have found that the pitch p between the nuggets 11 should be equal to or more than 2d (p ≥ 2d).

Next, the inventors conducted third verification experiments, focusing on that the aforementioned static peel strength tends to become lower when the pitch p between the nuggets 11 becomes too large. The static peel strength of each welded portion 1 was measured for the steel plates 10 joined by various welded portions 1 having different pitches p.

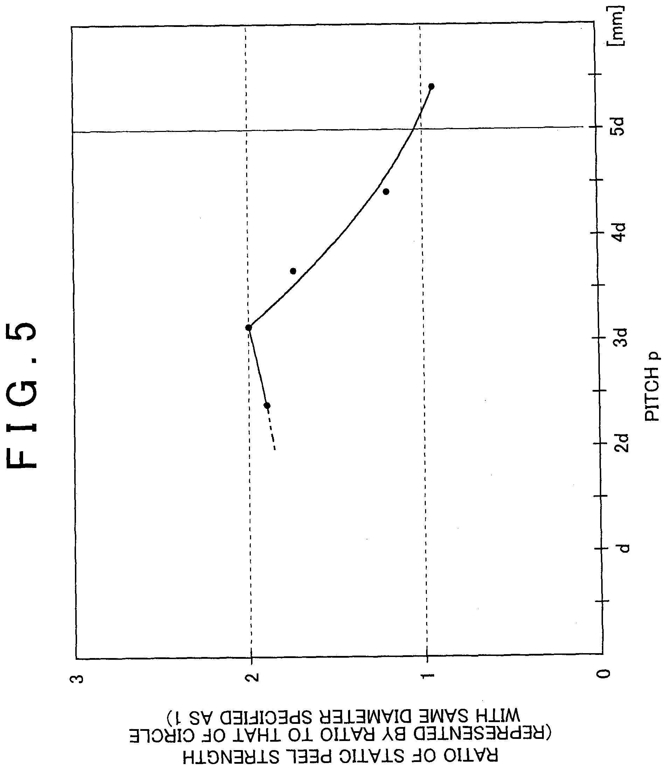

Results of the third verification experiments will be described with reference to FIG. 5. FIG. 5 is a graph illustrating a relationship between ratio of static peel strength, plotted on the vertical axis, and pitch p between the nuggets 11, plotted on the horizontal axis (in mm). The "ratio of static peel strength" is a ratio of static peel strength of a welded portion formed by the laser welding method according to the first embodiment, to the static peel strength of a circular nugget formed by a conventional laser welding method and having a similar diameter to that of the closed curve 12 of the welded portion 1 to be measured (see FIG. 1A), and is represented by a value relative to the value of the latter that is defined as 1. The letter "d" indicated in FIG. 5 represents diameter d of the nugget 11.

As shown in FIG. 5, the ratio of static peel strength assumes its maximum value of 2 when the pitch p between the nuggets 11 is 3d (p = 3d), and then gradually decreases as the pitch p increases. When the pitch p between the nuggets 11 exceeds 5d (mm), the ratio of static peel strength becomes lower than 1.

Based on the results of the third verification experiments described above, the inventors have found that the pitch p between the nuggets 11 should be equal to or less than 5d (p ≤ 5d).

Thus, based on the results of the first to third verification experiments, the inventors have found for the welded portion 1 formed of a plurality of nuggets 11 that (1) the diameter d of each nugget 11 should be equal to or less than 3√t (d ≤ 3√t); (2) the pitch p between the adjacent nuggets 11 should be equal to or more than 2d but no more than 5d (2d ≤ p ≤ 5d), and (3) the number of nuggets 11 should be three or more, while the virtual line connecting these nuggets 11 should not be a straight line but should always form a polygonal shape. The laser welding method according to the first embodiment of the invention has thus been completed based on these findings. The letter "t" used in the description above denotes a thickness of the thinnest steel plate 10 of the plurality of steel plates 10.

Description will be made of confirmatory experiments conducted by the inventors in order to confirm the effects of the laser welding method according to the first embodiment. Firstly, confirmatory experiment conducted by the inventors in order to confirm the effects on static strength will be described.

The inventors prepared three different types of welded portions 1 which were formed by the laser welding method according to the first embodiment such that the closed curve 12 of each welded portion 1 was defined by a circle (see FIG. 1A), and had diameters D of 4 mm, 6 mm, and 8 mm, respectively (hereafter, referred to as the "static strength test samples of the invention"). In addition, the inventors prepared welded portions, as targets for comparison with the static strength test samples of the invention, which were formed by a conventional laser welding method and were formed of three different types of circular nuggets and circumferential nuggets having similar diameters to those of the closed curves 12 of the static strength test samples of the invention (hereafter, referred to as the "first comparative static strength test samples"). Further, the inventors prepared a welded portion, as a target for comparison with the static strength test samples of the invention, which was formed by a conventional spot welding method and formed of nuggets each having a diameter of 6.5 mm (hereafter, referred to as the "second comparative static strength test sample").

Static peel strength was measured for the plurality of static strength test samples of the invention, the first comparative static strength test samples, and the second comparative static strength test sample, and the results were compared.

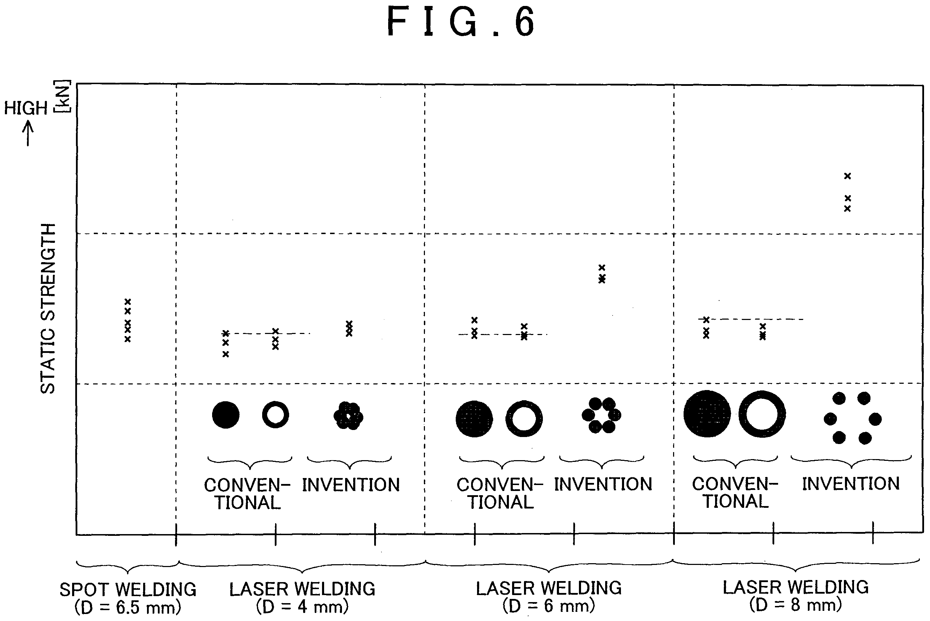

Results of the confirmatory experiments thus performed in order to confirm the effects on static strength will be described with reference to FIG 6. FIG. 6 is a graph illustrating static peel strengths of the static strength test samples of the invention and the first and second comparative static strength test samples, by plotting static peel strength (in kN) along the vertical axis while arranging the samples along the horizontal axis.

As shown in FIG. 6, all the static strength test samples of the invention, which were formed by the laser welding method according to the first embodiment to form the closed curves 12 having diameters D of 4 mm, 6 mm, and 8 mm, exhibited higher static peel strength than the first comparative static strength test samples having similar diameters. Comparing the static strength test sample of the invention the closed curve 12 of which had a diameter D of 6 mm with the second comparative static strength test sample the nugget of which had a diameter of 6.5 mm, the static strength test sample of the invention exhibited a higher static peel strength. Further, while the static peel strengths of the first comparative static strength test samples formed by the conventional laser welding method were substantially the same even though the diameter of the nuggets was varied, the static peel strength of the static strength test samples of the invention increased as the diameter D of the closed curve 12 was increased. This means that the laser welding method according to the first embodiment is capable of giving any desired static peel strength to the welded portion 1 by changing the value of the diameter D of the closed curve 12.

Next, description will be made of confirmatory experiments the inventors conducted to confirm the effects relating to dynamic (impact) strength.

The inventors prepared a welded portion 1 which was formed by the laser welding method according to the first embodiment such that the closed curve 12 (see FIG. 1A) of the welded portion 1 was defined by a circle with a diameter D of 6 mm and each nugget 11 had a diameters d of 1.4 mm (hereafter, referred to as the "dynamic strength test sample of the invention"). In addition, the inventors prepared a welded portion, as a target for comparison with the dynamic strength test sample of the invention, which was formed by a conventional laser welding method and was formed of circular nuggets having a similar diameter (6 mm) to that of the closed curve 12 of the dynamic strength test sample of the invention (hereafter, referred to as the "first comparative dynamic strength test sample"). Further, the inventors prepared a welded portion, as a target for comparison with the dynamic strength test sample of the invention, which was formed by a conventional laser welding method and was formed of nuggets having a diameter of 5 mm (hereafter, referred to as the "second comparative dynamic strength test sample").

The impact shear strength and impact peel strength were measured for the dynamic strength test sample of the invention, the first comparative dynamic strength test sample, and the second comparative dynamic strength test sample, and measurement results were compared.

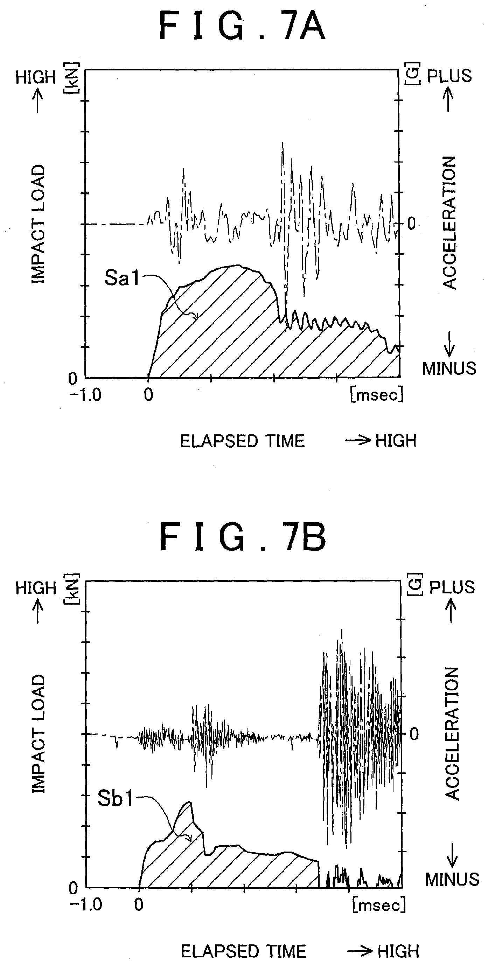

Results of the confirmatory experiments thus conducted to confirm the effects relating to dynamic strength will be described with reference to FIG. 7A to FIG. 9B. FIG. 7A to FIG. 9B are graphs each illustrating variation with time of impact load and acceleration of the impact load. In FIG. 7A to FIG. 9B, the vertical axis represents impact load (in kN) and acceleration of the impact load (in G), while the horizontal axis represents elapsed time (in msec).

FIG. 7A to FIG. 9B illustrate measurement results of the dynamic strength test sample of the invention, the first comparative dynamic strength test sample, and the second comparative dynamic strength test sample in sequence. In FIG. 7A to FIG. 9B, those figures with a suffix A illustrate the measurement results of impact load applied in a shear direction, while those with a suffix B illustrate the measurement results of impact load applied in a peeling direction. Further, in FIG. 7A to FIG. 9B, variation in impact load is indicated by a continuous solid line, while variation in acceleration of the impact load is indicated by a continuous dashed line.

In FIG. 7A to FIG. 9B, the amount of absorbed energy which signifies the "impact shear strength" or "impact peel strength" as described above, is represented by the area of a region defined by the vertical axis, the horizontal axis, and the continuous line representing a degree of variation in impact load.

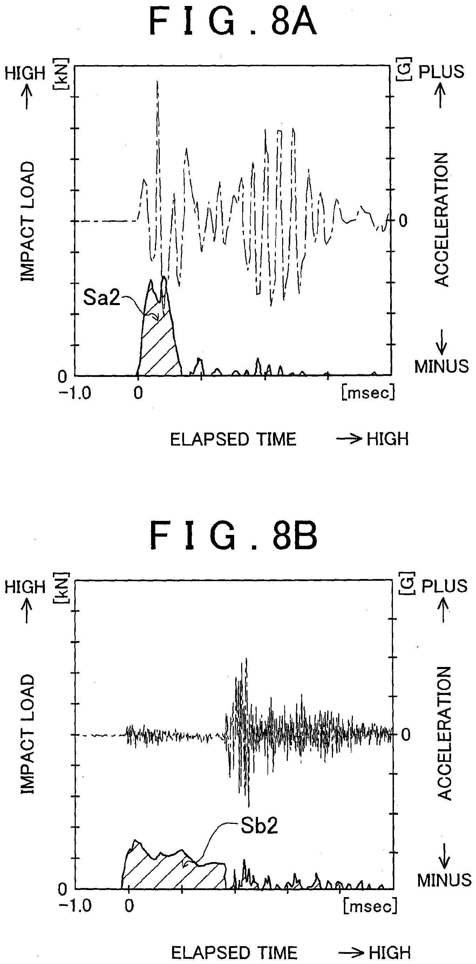

The area of a region Sa1 shown in FIG. 7A and representing the amount of absorbed energy of the dynamic strength test sample of the invention is greater than the area of a region Sa2 shown in FIG. 8A and representing the amount of absorbed energy of the first comparative dynamic strength test sample. Therefore, it is confirmed that the dynamic strength test sample of the invention formed by the laser welding method according to the first embodiment is superior to and has higher impact shear strength than the first comparative dynamic strength test sample formed by the conventional laser welding method. The area of a region Sb1 shown in FIG. 7B and representing the amount of absorbed energy of the dynamic strength test sample of the invention is greater than the area of a region Sb2 shown in FIG. 8B and representing the amount of absorbed energy of the first comparative dynamic strength test sample. Therefore, it is confirmed that the dynamic strength test sample of the invention formed by the laser welding method according to the first embodiment is superior to and has higher impact peel strength than the first comparative dynamic strength test sample formed by the conventional laser welding method.

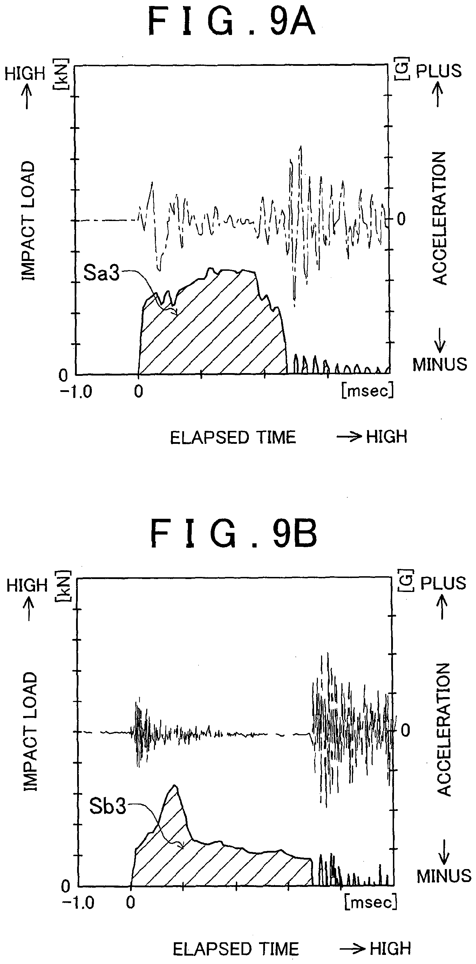

On the other hand, the area of the region Sa1 shown in FIG. 7A and representing the amount of absorbed energy of the dynamic strength test sample of the invention is substantially equal to the area of a region Sa3 shown in FIG. 9A and representing the amount of absorbed energy of the second comparative dynamic strength test sample. Therefore, it is confirmed that the dynamic strength test sample of the invention formed by the laser welding method according to the first embodiment has substantially the same impact shear strength as that of the second comparative dynamic strength test sample formed by a spot welding method. Further, the area of the region Sb1 shown in FIG. 7B and representing the amount of absorbed energy of the dynamic strength test sample of the invention is substantially equal to that of the area of a region Sb3 shown in FIG. 9B and representing the amount of absorbed energy of the second comparative dynamic strength test sample. Therefore, it is confirmed that the dynamic strength test sample of the invention formed by the laser welding method according to the first embodiment has substantially the same impact peel strength as that of the second comparative dynamic strength test sample formed by the conventional spot welding method.

It can be confirmed, based on the results of the confirmatory experiments, that the laser welding method according to the first embodiment can provide a equal or superior levels of static strength and dynamic (impact) strength in comparison with the conventional laser welding method or spot welding method.

### Laser Welding Method According To Second Embodiment

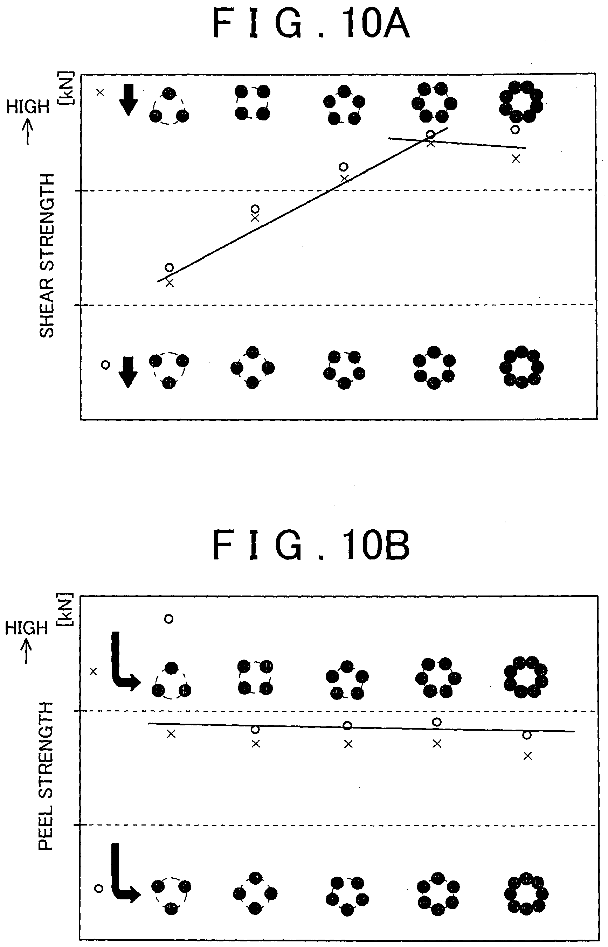

A laser welding method according to a second embodiment of the invention will be described with reference to FIG. 10A to FIG. 12B. The laser welding method according to the second embodiment is a laser welding method for joining a plurality of steel plates superposed on each other, and has been developed for the purpose of providing a welded portion between the steel plates with strength characteristics substantially equal to those of a welded portion (joint) formed by a conventional spot welding method.

The welded portion formed by the laser welding method according to this second embodiment is configured substantially in the same manner as the welded portion 1 formed by the laser welding method according to the first embodiment described above. Therefore, the following description will be principally made of different features from the first embodiment.

In order to examine the laser welding method according to the second embodiment, the inventors conducted various verification experiments as described below, focusing attention on orientation of a group of nuggets 11 A forming the welded portion 1 (see FIG. 1A and FIG. 1B). The inventors conducted fourth verification experiments, focusing attention on the fact that the extent of influence of orientation of a group of nuggets 11A differs depending on the number of nuggets 11. Specifically, the shear strength and peel strength of welded portions 1 formed by groups of nuggets 11A formed of various numbers of nuggets arranged in different orientations. The term "peel strength" has the same meaning as static peel strength. The term "shear strength" means static shear strength that is represented by a maximum tensile load that the welded portion 1 can resist without being broken when the tensile load is applied so as to be gradually increased toward a shear direction.

Results of the fourth verification experiments will be described with reference to FIG. 10A and FIG. 10B. FIG. 10A is a graph illustrating shear strength of groups of nuggets 11A, by plotting shear strength (in kN) along the vertical axis while showing formations of the groups of nuggets 11A along the upper and lower horizontal axes for each of the numbers of nuggets 11. The formations of the groups of nuggets 11A are classified into those along the upper horizontal axis and those along the lower horizontal axis based on their directional properties, such that the groups of nuggets 11A shown along the upper horizontal axis have a different orientation from those shown along the lower horizontal axis. FIG. 10B is a graph illustrating peel strength of the groups of nuggets 11A, by plotting peel strength (in kN) along the vertical axis while showing formations of the groups of nuggets 11A along the upper and lower horizontal axes for each of the numbers of nuggets 11. The formations of the groups of nuggets 11A are classified into those along the upper horizontal axis and those along the lower horizontal axis based on their orientations, such that the groups of nuggets 11A shown along the upper horizontal axis have a different orientation from those shown along the lower horizontal axis.

As seen from FIG. 10A, significant difference in shear strength was not observed between each pair of the groups of nuggets 11A having the same numbers of nuggets 11A but different orientations. Therefore, the degree of influence of orientation of the groups of nuggets 11A was not significant. The degree of influence of orientation did not differ significantly depending on the numbers of nuggets 11 of the groups of nuggets 11A. When the number of nuggets 11 was within a range from three or more to about six or less, the shear strength was increased as the number of nuggets 11 increased, regardless of the orientations of the groups of nuggets 11A. As seen from FIG. 10B, when the number of nuggets 11 was three, the peel strength differed significantly depending on orientations of the groups of nuggets 11A. Therefore, the degree of influence of orientations of the groups of nuggets 11A was significant. When the number of nuggets 11 was four, the shear strength did not differ significantly depending on orientations of the groups of nuggets 11A, and hence the degree of influence of orientations of the groups of nuggets 11A was insignificant.

Based on the results of the fourth verification experiments described above, the inventors have concluded that the number of nuggets 11 should be at least four or more in order to minimize the degree of influence of orientation of the group of nuggets 11A as much as possible.

The inventors then focused attention to a relationship between diameter d of virtual closed curves 12 (see FIG. 1A) and orientation of groups of nuggets 11A, and conducted fifth verification experiments by preparing samples of welded portions 1 having different diameters D (D = 6 mm, 8 mm, and 10 mm), and measuring the shear strength and peel strength of the samples for each orientation of the groups of nuggets 11A. On the other hand, a comparison sample was prepared by forming a welded portion by a conventional spot welding method such that each nugget had a diameter of 6.5 mm, and the shear strength and peel strength of this comparison sample were measured at the same time. The number of nuggets 11 of the welded portion of the comparison sample was six.

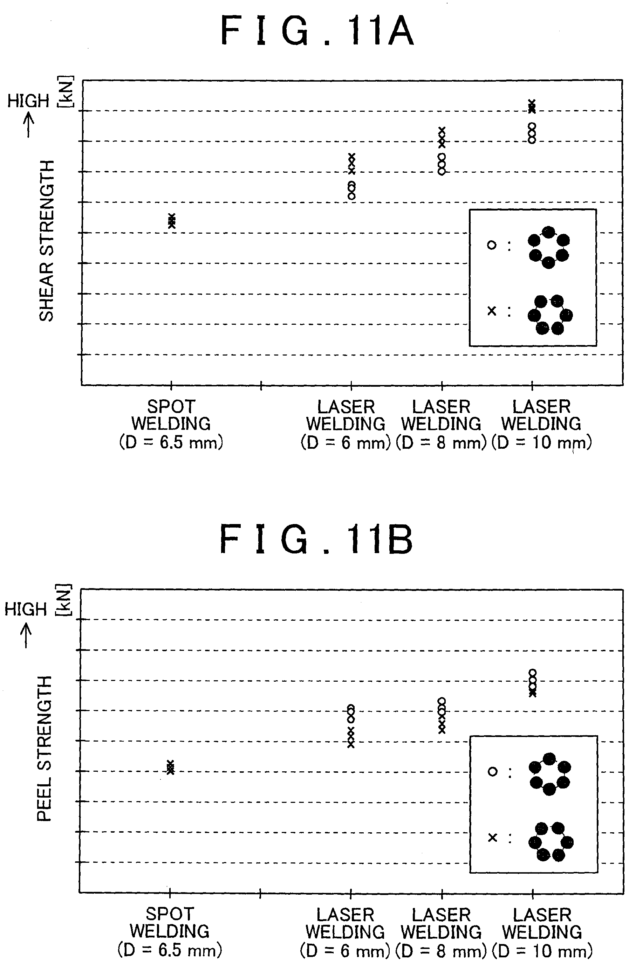

Results of the fifth verification experiments will be described with reference to FIG. 11. FIG. 11A is a graph showing the shear strengths of the samples and the comparison sample for each orientation, by plotting the shear strength (in kN) along the vertical axis while plotting, along the horizontal axis, the diameters D of the closed curves 12 (see FIG. 1A) and the diameter of the nuggets formed by the conventional spot welding method. FIG. 11B is a graph showing the peel strengths of the samples and the comparison sample for each orientation, by plotting the peel strength (in kN) along the vertical axis while plotting, along the horizontal axis, the diameters D of the closed curves 12 (see FIG. 1A) and the diameter of the nuggets formed by the conventional spot welding method.

As seen from FIG. 11A, the shear strength gradually increased as the value of the diameter D of the closed curve 12 became greater, while the shear strengths for the diameters D (D = 6 mm, 8 mm, and 10 mm) assumed substantially the same value without being significantly affected by the orientation of the groups of nuggets 11A. It was confirmed that the group of nuggets 11A formed in the closed curve 12 having the diameter D of 6 mm exhibited a shear strength that was sufficiently higher than the shear strength of the nugget (with a diameter of 6.5 mm) formed by the conventional spot welding method.

As seen from FIG. 11B, the peel strength gradually increased as the value of the diameter D of the closed curves 12 became greater, while the peel strengths for the diameters D (D = 6 mm, 8 mm, and 10 mm) assumed substantially the same value without being significantly affected by the orientation of the groups of nuggets 11A. It was confirmed that the group of nuggets 11A formed in the closed curve 12 having the diameter D of 6 mm exhibited a peel strength that was sufficiently higher than the peel strength of the nugget (with a diameter of 6.5 mm) formed by the conventional spot welding method.

Based on the results of the fifth verification experiments, the inventors have concluded that any desired shear strength or peel strength can be obtained regardless of orientation of the group of nuggets 11A by changing the diameter D of the closed curve 12 provided that the number of nuggets 11 is at least six or more. When the diameter D of the closed curve 12 is at least 6 mm or more, that group of nuggets 11A has a shear strength and a peel strength equal to or higher than those of a nugget formed by a conventional spot welding method to have a similar diameter.

Based on the results of the fourth and fifth verification experiments and results of various other studies, the inventors have concluded that when a welded portion 1 is formed of a plurality of nuggets 11, (1) the diameter d of each nugget 11 should be √t or more but no more than 3√t (√t ≤ d ≤ 3√t); (2) the pitch p between adjacent nuggets 11 should be 0.8d or more but no more than 3d (0.8d ≤ p ≤ 3d); and (3) the number of nuggets 11 should be four or more but no more than 12. The inventors thus reached completion of the laser welding method according to the second embodiment. The letter "t" in the description above denotes a thickness of the thinnest steel plate 10 of a plurality of steel plates 10 superposed on each other. The diameter D of the closed curve 12 should be 3√t or more but no more than 10√t (3√t ≤ D ≤ 10√t).

Description will be made of the confirmatory experiments the inventors conducted in order to confirm the effects of the laser welding method according to the second embodiment. Firstly, the inventors prepared two steel plates 10 (see FIG. 1A) made of SCGA590 and having thicknesses of 1.4 mm and 1.2 mm, respectively. These steel plates 10 were then joined by the laser welding method according to the second embodiment.

The inventors performed laser welding on the welded portion 1 formed between the steel plates 10 such that the diameter d of each nugget 11 was about 1.4 mm (d = 1.4 mm), and the number of nuggets 11 in each group of nuggets 11A was six, and the pitch p between adjacent nuggets 11 was 3 mm (p = 3 mm). The welded portion 1 was formed with use of a laser having a light focusing diameter of 0.6 mm, such that a closed curve 12 defined by a circle having a diameter D of 6 mm (D = 6 mm) was formed.

The inventors also prepared two steel plate similar to the steel plates 10 formed by a conventional spot welding method as a target for comparison. The diameter of a nugget thus formed was similar to that of the diameter D of the closed curve 12.

The two steel plates 10 joined with the laser welding method according to the second embodiment (hereafter, referred to as the "sample steel plates of the invention") and the two steel plates joined with the conventional spot welding method (hereafter, referred to as the "comparison sample steel plates") were subjected to tensile load applied in a shear direction for obtaining static shear strength and to tensile load applied in a peeling direction for obtaining static peel strength, and measurement of the tensile strengths was performed.

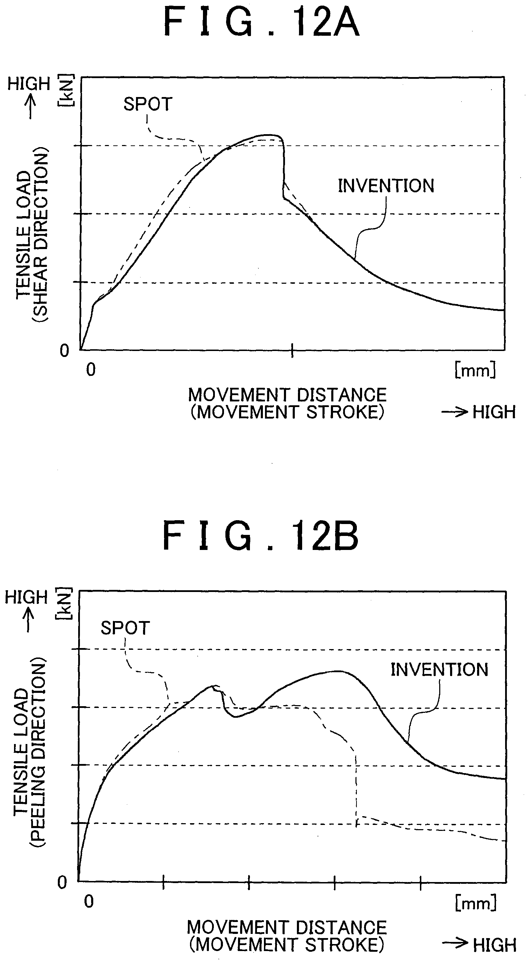

Results of the confirmatory experiments thus conducted in order to confirm the effects of the laser welding method according to the second embodiment will be described with reference to FIG. 12A and FIG. 12B. FIG. 12A and FIG. 12B are graphs illustrating relationships between tensile load and relative movement distance (movement stroke) of the two steel plates for the sample steel plates of the invention and the comparison sample steel plates, by plotting the tensile load (in kN) along the vertical axis while plotting the relative movement distance (in mm) along the horizontal axis. FIG. 12A is a graph illustrating the relationship between tensile load and relative movement distance when the static shear strength is to be obtained, while FIG. 12B is a graph illustrating the relationship between tensile load and relative movement distance when the static peel strength is to be obtained.

As seen from FIG. 12A, it was confirmed that the tensile load applied to the sample steel plates of the invention for obtaining the static shear strength and the tensile load applied to the comparison sample steel plates were substantially the same in the entire range of movement distance (movement stroke). As seen from FIG. 12B, the tensile load applied to the sample steel plates of the invention for obtaining the static peel strength and the tensile load applied to the comparison sample steel plates were substantially the same in a range of an initial stage of movement distance (movement stroke) (a range where the movement distance is small). However, once the movement distance (movement stroke) exceeded a certain value, the tensile load applied to the sample steel plates of the invention became higher than the tensile load applied to the comparison sample steel plates.

Based on the results of the confirmatory experiments described above, it was confirmed that the laser welding method according to the second embodiment could provide a static strength equal to or higher than the conventional spot welding method.

### Laser Welding Method According To Third Embodiment

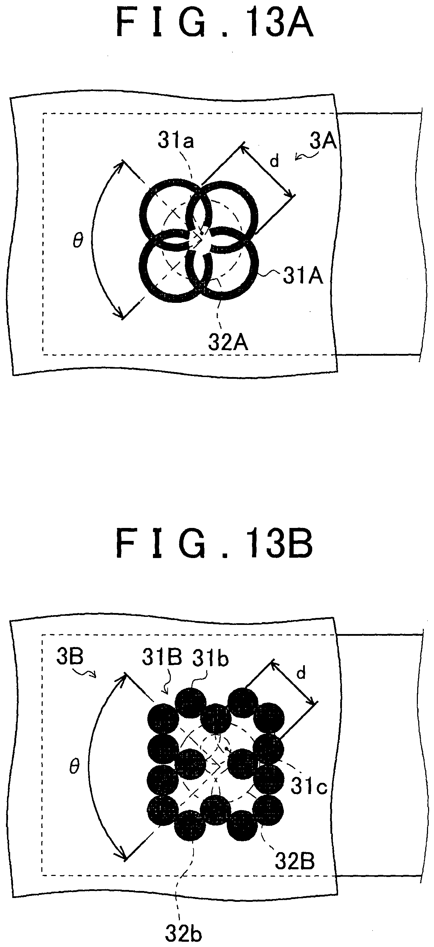

A laser welding method according to a third embodiment of the invention will be described with reference to FIG. 13. The laser welding method according to the third embodiment is a laser welding method for joining a plurality of steel plates superposed on each other. This welding method has been developed in order to provide a joint between the steel plates with a higher peel strength than a linear welded portion (joint) formed by a conventional laser welding method.

As shown in FIG. 13A, a welded portion 3A formed by the laser welding method according to the third embodiment is formed, for example, of a plurality of nuggets 31A arranged at a certain pitch on a virtual closed curve 32A defined by a circle. Each nugget 31A is formed by the scanning formation method described above into a quasi-annular shape which is not a complete annular shape but is partially provided with a gap 31a. The nuggets 31A are arranged such that the gaps 31 a thereof face the center of the closed curve 32A. The diameter of the closed curve 32A is determined to be such a size that the adjacent nugget 31A intersect with each other.

Alternatively, a welded portion 3B formed by the laser welding method according to the third embodiment may be formed, for example, of a plurality of groups of nuggets 31B arranged at a certain pitch on a virtual closed curve 32B defined by a circle as shown in FIG. 13B. Each of the groups of nuggets 31B is formed of a plurality of nuggets 31b having a circular shape with a small diameter. These nugget 31b are arranged at a certain pitch on a virtual closed curve 32b forming the group of nuggets 31B. Each of the groups of nuggets 31B is provided with a missing part 31c where one or more nuggets 31b (one nugget in this embodiment) are missing from the closed curve 32b. The groups of nuggets 31B are arranged such that their missing parts 31c face the center of the closed curve 32B. The diameter of the closed curve 32B is determined such that the adjacent groups of nuggets 31B (more specifically, the closed curves 32b of the groups of nuggets 31B) intersect with each other.

The inventors have had findings about the welded portion 3A or the welded portion 3B configured as described above that (1) the diameter d of each nugget 31A or each group of nuggets 31B should be √t or more (d ≥ √t); (2) the shape of the closed curve 32A or the closed curve 32B should be circular or elliptical; and (3) the angle θ formed between the central axes of the adjacent nuggets 31A or adjacent groups of nuggets 31B should be 120 degrees or less (θ ≤ 120 degrees). Based on these findings, the inventors have reached completion of the laser welding method according to the third embodiment. The letter "t" used in the description above denotes a thickness of the thinnest steel plate of the steel plates superposed on each other.

In the welded portion 3A or welded portion 3B formed by the laser welding method according to the third embodiment, the ends of the welded part (more specifically, the gaps 31a in the nuggets 31A or the missing parts 31c c on the groups of nuggets 31B) are located in an inner part of the circumference of the closed curve 32A or the closed curve 32B. In a linear welded portion (joint) formed by a conventional laser welding method, for example, external force tends to concentrate on the opposite ends, possibly leading to peeling. Unlike such a conventional method, the laser welding method according to the third embodiment is capable of ensuring a stable quality.

### Laser Welding Method According To Fourth Embodiment

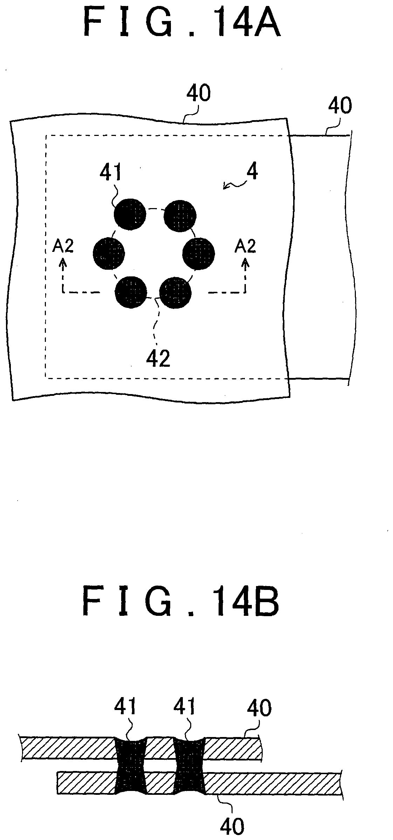

Next, a laser welding method according to a fourth embodiment of the invention will be described with reference to FIG. 14A to FIG. 17B. The laser welding method according to the fourth embodiment is a laser welding method for joining a plurality of steel plates superposed on each other, and has been developed for the purpose of improving the anti-corrosive properties of the welded portions (joints) formed by the laser welding methods according to the first to third embodiments.

The laser welding method according to the fourth embodiment is performed according to the procedures described below. Firstly, as shown in FIG. 14A, a welded portion 4 is formed on a plurality of (two in this embodiment) steel plates 40 superposed on each other, by the laser welding method according to the first embodiment.

The welded portion 4 is formed of a plurality of nuggets 41 arranged at a certain pitch on a virtual closed curve 42 defined by a circle. As shown in FIG. 14B in a cross-sectional view, the opposite end faces of each nugget 41 (the parts of each nugget on the same side as the surfaces of the steel plates 40 opposite to their surfaces joined to each other; the same shall apply hereafter) are formed into a bowl shape which is slightly depressed at its central part. When the steel plates 40 have a welded portion 4 formed of a plurality of nuggets 41 having such a shape, water or the like tends to pool in the depressed bowl-shaped parts of the nuggets 41 and hence the welded portion 4 is in a state prone to get rusted.

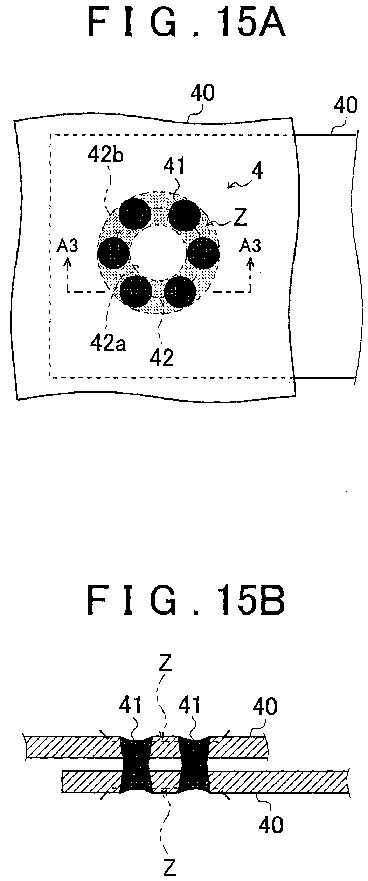

Subsequently, as shown in FIG. 15A, melt processing is performed on a region Z surrounded by an inner curve 42a formed along the closed curve 42 on the inner side (on the inner circumferential side) of the closed curve 42, and an outer curve 42b formed along the closed curve 42 on the outer side (on the outer circumferential side) of the closed curve 42, and containing all the nuggets 41 forming the welded portion 4. Specifically, as shown in FIG. 15B in a cross-sectional view, the melt processing is performed on the peripheral region of the end faces of the nuggets 41 within the region Z (the region surrounded by the two-dot chain line in FIG. 15B). The inner curve 42a and the outer curve 42b are in contact with all the nuggets 41.

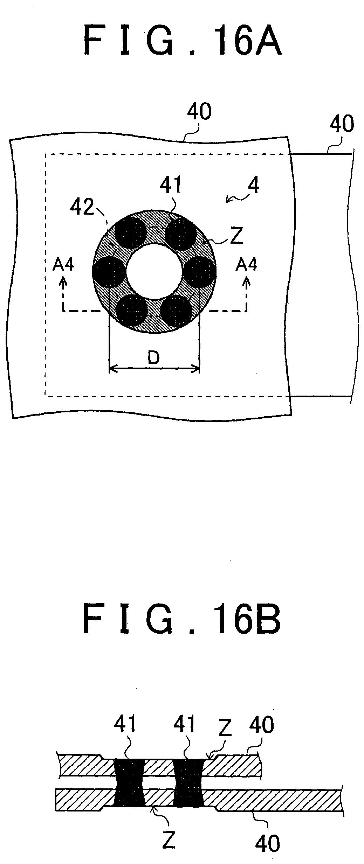

When the melt processing is completed, as shown in FIG. 16A, all the nuggets 41 are located on the bottom faces of the regions Z. This means that, as shown in FIG. 16B, the region around the end faces of the nuggets 41 which has been molten by the melt processing flows into the depressions of the end faces of the nuggets 41, whereby the opposite end faces of the nuggets 41 become flush with the bottom faces of the regions Z. As a result, even when the steel plates 40 are joined at a welded portion 4 formed of a plurality of nuggets 41 configured as described above, the tendency of water pooling in the bowl-shaped parts of the nuggets 41 is eliminated, and the anti-corrosion properties of the welded portion 4 can be improved.

Description will be made of confirmatory experiments the inventors conducted in order to confirm effects on strength possibly given to the welded portion 4 by performing the melt processing on the region Z.

The inventors prepared three different welded portions 4 which were formed by the laser welding method according to the first embodiment such that the closed curves 42 of the welded portions 4 (see FIG. 16A) were each defined by a circle and had diameters D of 4 mm, 6 mm, and 8 mm, respectively. All these welded portions 4 were subjected to the melt processing of the laser welding method according to the fourth embodiment (hereafter, referred to as the "strength test samples of the invention"). The inventors also prepared, as targets for comparison with the strength test samples of the invention, three different welded portions 1 which were formed by the laser welding method according to the first embodiment without performing the melt processing, such that the closed curves 12 of the welded portion 1 (see FIG. 1A) were each defined by a circle and had diameters D of 4 mm, 6 mm, and 8 mm, respectively (hereafter, referred to as the "comparative strength test samples"). The number of nuggets 41 forming the welded portion 4, or the number of nuggets 11 forming the welded portion 1 were both six.

Shear strength and peel strength of these strength test samples of the invention and comparative strength test samples were measured and compared.

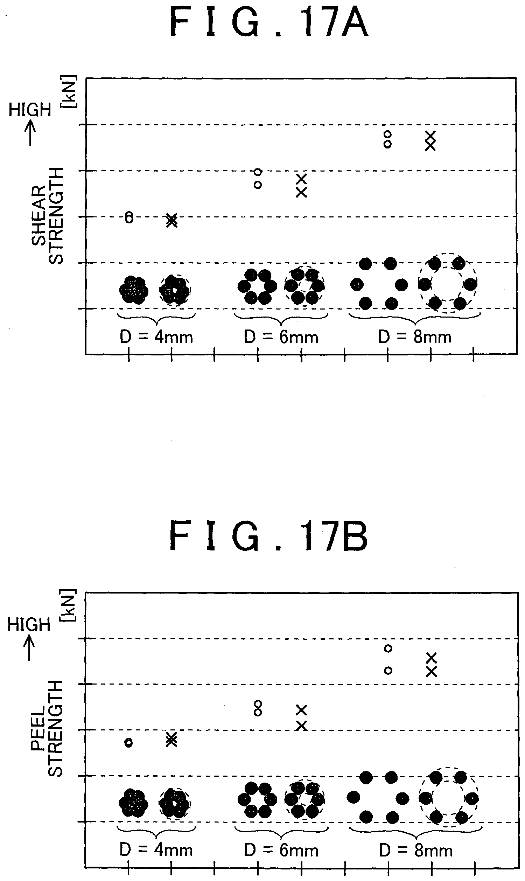

Results of the confirmatory experiment conducted as described above will be described with reference to FIG. 17. FIG. 17A is a graph illustrating the shear strength of the strength test samples of the invention and the comparative strength test samples, by plotting the shear strength (in kN) along the vertical axis while plotting along the horizontal axis the diameters D of the closed curves 12 and 42 of the strength test samples of the invention and the comparative strength test samples. FIG. 17B is a graph illustrating the peel strength of the strength test samples of the invention and the comparative strength test samples, by plotting the peel strength (in kN) along the vertical axis while plotting along the horizontal axis the diameters D of the closed curves 12 and 42 of the strength test samples of the invention and comparative strength test samples.

As shown in FIG. 17A and FIG. 17B, it was confirmed that the welded portion 1 and the welded portion 4 exhibited substantially similar shear strength and peel strength to each other regardless of the diameter D of the closed curves 12 and 42 (6 mm, 8 mm, or 10 mm), and regardless of whether or not the samples were subjected to the melt processing of the laser welding method according to the fourth embodiment.

Based on the results of the confirmatory experiments described above, it was confirmed that the laser welding method according to the fourth embodiment was capable of improving the anti-corrosion property, without involving reduction of strength, for the welded portions (joints) formed by the laser welding method according to any of the first to third embodiments.

The welded portion formed by the laser welding method according to any of the first to fourth embodiments described above may assume various other patterns as described below.

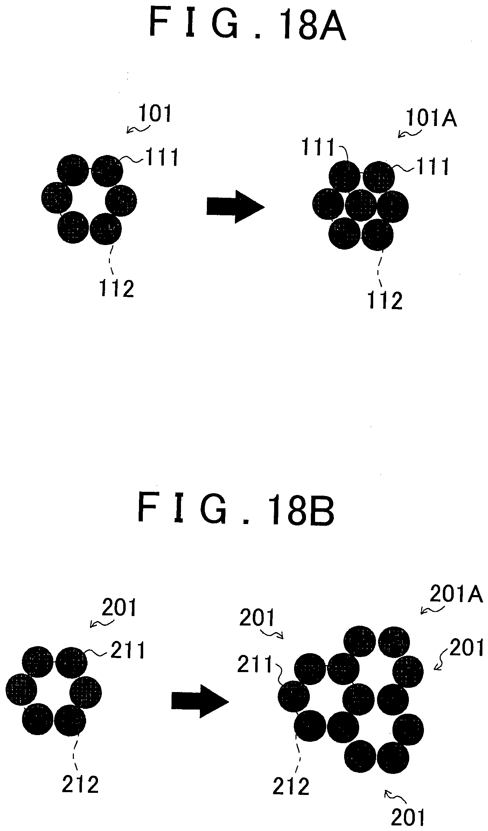

Specifically, as shown in FIG. 18A, when a welded portion 101 is formed of a plurality of nuggets 111 arranged at a certain pitch on a virtual closed curve 112 defined by a circle, it can be modified into a welded portion 101A by adding one more nugget 111 in the inner part of the closed curve 112. Further, as shown in FIG. 18B, when a welded portion 201 is formed of a plurality of nuggets 211 arranged at a certain pitch on a virtual closed curve 212 defined by a circle, it can be modified into a welded portion 201A by combining a plurality of welded portions 201 each having the same arrangement as the welded portion 201 while some of the nuggets 211 are used in common.

### Laser Welding Method According To Fifth Embodiment

A laser welding method according to a fifth embodiment of the invention will be described with reference to FIG. 10, FIG. 19, and FIG 20. The laser welding method according to the fifth embodiment is a laser welding method for joining a plurality of steel plates superposed on each other, and has been developed in order to allow the joint between the steel plates to have such orientation as to change only the peel strength without changing the shear strength significantly.

The inventors gave attention to the aforementioned results of the fourth verification experiments in studying the laser welding method according to the fifth embodiment.

The results of the fourth verification experiments will be described. As shown in FIG. 10A, the shear strength does not change significantly depending on the orientation of the group of nuggets 11A when the number of nuggets 11 (see FIG. 1) is three. On the other hand, as shown in FIG. 10B, the peel strength changes significantly depending on the orientation of the group of nuggets 11A when the number of nuggets 11 is three. More specifically, when the number of nuggets 11 is three, the peel strength becomes higher when one nugget 11 and then two nuggets 11 are arranged sequentially along the direction of external force (this means that the one nugget 11 is subjected to the external force in the first place) than when two nuggets 11 and then one nugget 11 are arranged sequentially along the direction of external force (this means that the two nuggets 11 are subjected to the external force in the first place).

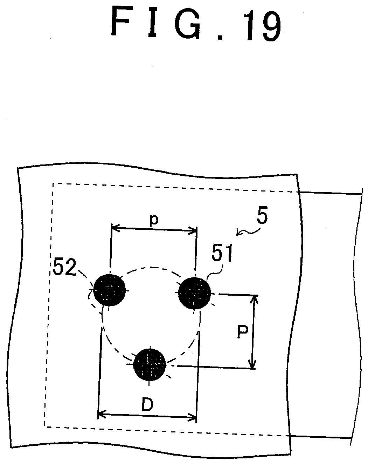

Based on the results of the fourth verification experiments, the inventors have found that, by limiting the number of the nuggets 11 to three, the group of nuggets 11A can be arranged in such an orientation that only the peel strength is changed without changing the shear strength significantly. Therefore, as shown in FIG. 19, the welded portion 5 formed by the laser welding method according to the fifth embodiment is formed of three nuggets 51 which are arranged at pitches p, P on a virtual closed curve 52 defined for example by a circle.

The inventors further conducted various studies and experiments, and based on the results thereof, have had findings about the welded portion 5 formed of a plurality of nuggets 51 that (1) the diameter d of each nugget 51 should be √t or more but no more than 3√t (√t ≤ d ≤ 3√t); (2) the pitch p between adjacent nuggets 51 should be 1.5 d or more but no more than 5d (1.5d ≤ p ≤ 5d), while the pitch P should be 0.5p or more but no more than 2p (0.5p ≤ P ≤ 2p); and (3) the number of nuggets 51 should be three. Based on these findings, the inventors have reached completion of the laser welding method according to the fifth embodiment. The letter "t" used in the description above denotes a thickness of the thinnest steel plate 10 of the plurality of steel plates 10 superposed on each other. The diameter D of the closed curve 12 is set to a value of 3√t or more but no more than 10√t (3√t ≤ D ≤ 10√t).

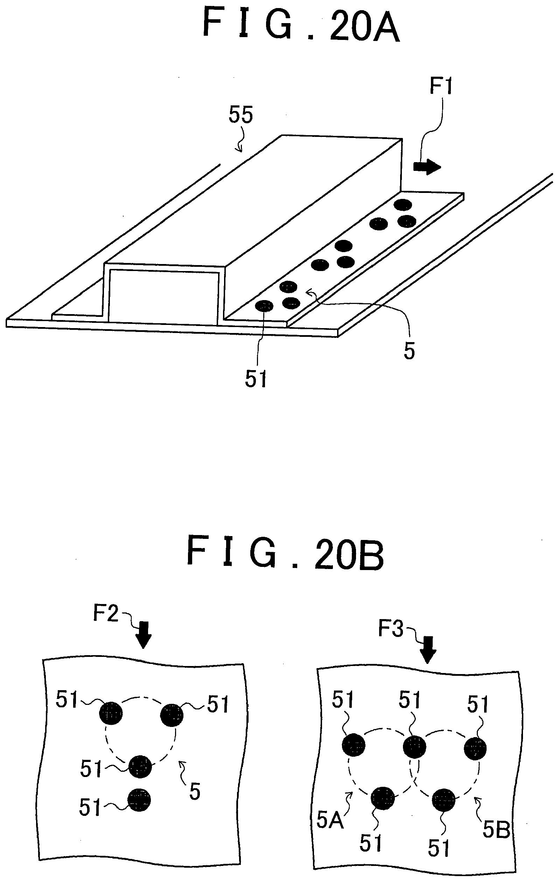

The laser welding method according to the fifth embodiment as described above is capable of changing the peel strength of the welded portion 5 without changing the shear strength of the welded portion 5, only by changing the orientation of the welded portion 5 formed of as few as three nuggets 51. Consequently, as shown in FIG 20A, for example, when the laser welding method of the invention is applied to a structure 55 which is subjected to an external force F the direction of which is predetermined, the number of welded portions 5 can be suppressed by specifying the orientation of the welded portions 5 based on the direction of the external force F1, and hence the number of nuggets 51 forming the welded portions 5 also can be suppressed, whereby an economic advantage can be provided. Further, as shown in FIG 20B, for example, one more nugget 51 may added to a welded portion 5 formed by sequentially arranging two nuggets 51 and then one nugget 51 along the direction of external force F2. Alternatively, a welded portion 5A formed by sequentially arranging two nuggets 51 and then one nugget 51 along the direction of external force F3 may be combined with a welded portion 5B formed by sequentially arranging two nuggets 51 and then one nugget 51 along the direction of external force F 3 while one of the two nuggets 51 is used in common. In this manner, the peel strengths of the welded portions 5, 5A, and 5B can be enhanced easily.

As described above, the laser welding method according to the first embodiment is a laser welding method for joining a plurality of steel plates 10 superposed on each other, and a welded portion 1 formed at a joint between the steel plates 10 is formed of a plurality of nuggets 11 arranged along a virtual closed curve 12. When the thickness of a steel plate 10 that is thinner of the outermost steel plates 10 is denoted by t, the diameter d of each nugget 11 is 3√t or less (d ≤ 3√t), and the pitch p between adjacent nuggets 11 is 2d or more but no more than 5d (2d ≤ p ≤ 5d), and the number of nuggets 11 is three or more.

In a welded structure having a plurality of steel plates 10 joined by the laser welding method according to the first embodiment, a welded portion 1 formed at a joint between the steel plates 10 is formed of a plurality of nuggets 11 arranged along a virtual closed curve 12, and when the thickness of a steel plate 10 that is thinner of the outermost steel plates 10 is denoted by t, the diameter d of each nugget 11 is 3√t or less (d ≤ 3√t), and the pitch p between adjacent nuggets 11 is 2d or more but no more than 5d (2d ≤ p ≤ 5d), and the number of nuggets 11 is three or more.

The laser welding method according to the first embodiment and welded structure configured as described above are able to form a welded portion 1 formed of a plurality of nuggets, 12, 12, ... arranged at a constant pitch p on a virtual closed curve 12, such that the welded portion 1 constantly has similar or higher strength characteristics than a welded portion formed by a conventional laser welding method to have a circumferential or circular shape with a similar diameter to that of the closed curve 12.

The "strength characteristics" are evaluated principally based static strength and dynamic (impact) strength. As for the static strength, the results of the confirmatory experiment conducted by the inventors and shown in FIG. 6 have proved, and as for the dynamic (impact) strength, the results of the confirmatory experiment conducted by the inventors and shown in FIG. 7 to FIG. 9 have proved that the welded portion 1 formed by the laser welding method according to the first embodiment constantly has similar or higher strength characteristics than a welded portion of a circumferential or circular shape with a diameter similar to that of the closed curve 12 of the welded portion 1.

In the laser welding method according to the fourth embodiment, melt processing is performed on a region Z surrounded by a virtual inner curve 42a and outer curve 42b formed along a closed curve 42 respectively on the inner side and outer side of the closed curve 42, and containing all the nuggets 41 forming a welded portion 4.

In a welded structure having a plurality of steel plates 40 joined by the laser welding method according to the fourth embodiment, melt processing is performed on a region Z surrounded by a virtual inner curve 42a and outer curve 42b formed along a closed curve 42 respectively on the inner side and outer side of the closed curve 42, and containing all the nuggets 41 forming a welded portion 4.

The configuration as described above makes it possible to prevent water or other fluid from standing in bowl-shaped recesses of the nuggets 41 and to improve the anti-corrosion properties of the welded portion 4.

## Claims

1. A welded structure comprising:
a plurality of steel plates (10) each joined to at least another one of the steel plates by laser welding, wherein the plurality of steel plates (10) include a welded portion (1), the welded portion (1) is formed at a joint where the steel plate (10) is joined to the other steel plate (10), the welded portion (1) is formed of a plurality of nuggets (11), the plurality of nuggets (11) are arranged along a virtual closed curve (12),
**characterized in that**
when a thickness of a thinnest steel plate (10) of the plurality of steel plates (10) is denoted by t, a diameter of each of the nuggets (11) is denoted by d, and a pitch between adjacent nuggets (11) is denoted by p, d is 3√t or less and p is 2d or more but no more than 5d, and
the number of nuggets (11) is three or more.

2. The welded structure according to claim 1, **characterized in that** a region (Z) containing all the nuggets (11) forming the welded portion is melt processed, and the region is surrounded by a virtual inner curve formed along the closed curve on an inner side of the closed curve and by a virtual outer curve formed along the closed curve on an outer side of the closed curve.

3. The welded structure according to claim 1 or 2, **characterized in that** the plurality of steel plates (10) are superposed on each other.

4. A laser welding method for joining a plurality of steel plates (10) superposed on each other, comprising:
forming a welded portion (1) at a joint where each of the steel plates (10) is joined to at least another one steel plate (10),
wherein the welded portion (1) is formed of a plurality of nuggets (11),
the plurality of nuggets are arranged along a virtual closed curve (12),
**characterized in that**
when a thickness of a thinnest steel plate (10) of the plurality of steel plates (10) is denoted by t, a diameter of each of the nuggets (11) is denoted by d, and a pitch between adjacent nuggets (11) is denoted by p, d is 3√t or less and p is 2d or more but no more than 5d, and
the number of nuggets (11) is three or more.

5. The laser welding method according to claim 4, further comprising:
melt processing a region (Z) surrounded by a virtual inner curve formed along the closed curve on an inner side of the closed curve and by a virtual outer curve formed along the closed curve on an outer side of the closed curve, and the region containing all the nuggets (11) forming the welded portion (1).

## Patentansprüche

1. Geschweißte Struktur mit:
mehreren Stahlplatten (10), die jeweils mit mindestens einer weiteren der Stahlplatten durch Laserschweißen verbunden sind,
wobei die mehreren Stahlplatten (10) einen verschweißten Abschnitt (1) umfassen,
der verschweißte Abschnitt (1) an einer Verbindung ausgebildet ist, an der die Stahlplatte (10) mit der anderen Stahlplatte (10) verbunden ist,
der geschweißte Abschnitt (1) aus mehreren Schweißkernen (11) gebildet ist,
die mehreren Schweißkerne (11) entlang einer virtuellen geschlossenen Kurve (12) angeordnet sind,
**dadurch gekennzeichnet, dass**
wenn eine Dicke einer dünnsten Stahlplatte (10) aus den mehreren Stahlplatten (10) als t bezeichnet wird, ein Durchmesser jedes der Schweißkerne (11) als d bezeichnet wird, und ein Abstand zwischen benachbarten Schweißkernen (11) als p bezeichnet wird, d 3√t oder weniger beträgt, und p 2d oder mehr, aber nicht mehr als 5d beträgt, und
die Anzahl der Schweißkerne (11) drei oder mehr beträgt.

2. Geschweißte Struktur nach Anspruch 1, **dadurch gekennzeichnet, dass** ein Bereich (Z) schmelzverarbeitet wird, der alle den geschweißten Abschnitt bildende Schweißkerne (11) enthält, und
der Bereich von einer virtuellen inneren Kurve umgeben ist, die entlang der geschlossenen Kurve auf einer Innenseite der geschlossenen Kurve gebildet ist, und von einer virtuellen äußeren Kurve, die entlang der geschlossenen Kurve auf einer Außenseite der geschlossenen Kurve gebildet ist.

3. Geschweißte Struktur nach Anspruch 1 oder 2, **dadurch gekennzeichnet, dass** die mehreren Stahlplatten (10) übereinander angeordnet sind.

4. Laserschweißverfahren zum Verbinden mehrerer Stahlplatten (10), die übereinander angeordnet sind, mit den Schritten:
Bilden eines geschweißten Abschnitts (1) an einer Verbindungsstelle, an der jede der Stahlplatten (10) mit mindestens einer anderen Stahlplatte (10) verbunden ist,
wobei der geschweißte Abschnitt (1) aus mehreren Schweißkernen (11) gebildet ist,
die Vielzahl von Schweißkernen entlang einer virtuellen geschlossenen Kurve (12) angeordnet sind,
**dadurch gekennzeichnet, dass**
wenn eine Dicke einer dünnsten Stahlplatte (10) aus den mehreren Stahlplatten (10) mit t bezeichnet wird, ein Durchmesser jedes der Schweißkernen (11) mit d bezeichnet wird und ein Abstand zwischen benachbarten Schweißkernen (11) mit p bezeichnet wird, d 3√t oder weniger beträgt, und p 2d oder mehr, aber nicht mehr als 5d beträgt, und
die Anzahl der Schweißkerne (11) drei oder mehr beträgt.

5. Laserschweißverfahren nach Anspruch 4, weiter mit den Schritten
Schmelzverarbeiten eines Bereichs (Z), der von einer virtuellen inneren Kurve umgeben ist, die entlang der geschlossenen Kurve auf einer Innenseite der geschlossenen Kurve ausgebildet ist, und von einer virtuellen äußeren Kurve, die entlang der geschlossenen Kurve auf einer Außenseite der geschlossenen Kurve ausgebildet ist, und wobei der Bereich alle Schweißkerne (11) enthält, die den geschweißten Abschnitt (1) bilden.

## Revendications

1. Structure soudée comprenant :
une pluralité de plaques en acier (10), chacune assemblée à au moins une autre des plaques en acier par soudage au laser,
dans laquelle la pluralité de plaques en acier (10) comprennent une partie soudée (1), la partie soudée (1) est formée au niveau d'un joint où la plaque en acier (10) est assemblée à l'autre plaque en acier (10),
la partie soudée (1) est formée avec une pluralité de noyaux (11), la pluralité de noyaux (11) sont agencés le long d'une courbe fermée virtuelle (12),
**caractérisée en ce que** :
lorsqu'une épaisseur de la plaque en acier la plus fine (10) de la pluralité de plaques en acier (10) est désignée par t, un diamètre de chacun des noyaux (11) est désigné d, et un pas entre les noyaux (11) adjacents est désigné par p, d est 3√t ou moins et p est 2d ou plus mais non supérieur à 5d, et
le nombre de noyaux (11) est de trois ou plus.

2. Structure soudée selon la revendication 1, **caractérisée en ce qu'**une région (Z) contenant tous les noyaux (11) formant la partie soudée est traitée par fusion, et la région est entourée par une courbe interne virtuelle formée le long de la courbe fermée sur un côté interne de la courbe fermée et par une courbe externe virtuelle formée le long de la courbe fermée sur un côté externe de la courbe fermée.

3. Structure soudée selon la revendication 1 ou 2, **caractérisée en ce que** la pluralité de plaques en acier (10) sont superposées les unes sur les autres.

4. Procédé de soudage au laser pour assembler une pluralité de plaques en acier (10) superposées les unes sur les autres, comprenant l'étape consistant à :
former une partie soudée (1) au niveau d'un joint où chacune des plaques en acier (10) est assemblée au niveau d'au moins une autre plaque en acier (10),
dans lequel la partie soudée (1) est formée avec une pluralité de noyaux (11),
la pluralité de noyaux sont agencés le long d'une courbe fermée virtuelle (12),
**caractérisé en ce que** :
lorsqu'une épaisseur de la plaque en acier la plus fine (10) de la pluralité de plaque en acier (10) est désignée par t, un diamètre de chacun des noyaux (11) est désigné par d, et un pas entre les noyaux (11) adjacents est désigné par p, d est 3√t ou inférieur et p est 2d ou plus, mais non supérieur à 5d, et
le nombre de noyaux (11) est de trois ou plus.

5. Procédé de soudage au laser selon la revendication 4, comprenant en outre l'étape consistant à :
traiter par fusion une région (Z) entourée par une courbe interne virtuelle formée le long de la courbe fermée sur un côté interne de la courbe fermée et par une courbe externe virtuelle formée le long de la courbe fermée sur un côté externe de la courbe fermée, et la région contenant tous les noyaux (11) formant la partie soudée (1).
